# EUROPÄISCHE PATENTSCHRIFT

(11) **EP 3 536 520 B1**
(45) Veröffentlichungstag und Bekanntmachung des Hinweises auf die Patenterteilung: **21.12.2022**
(21) Anmeldenummer: 19150627.8
(22) Anmeldetag: 08.01.2019
(51) Int. Cl.: B60C 1/00, B60C 19/12

(54) **SELBSTABDICHTENDER FAHRZEUGLUFTREIFEN MIT DICHTMITTELLAGE**
SELF-SEALING VEHICLE TYRE WITH SEALANT LAYER
PNEUMATIQUE DE VÉHICULE AUTO-ÉTANCHÉIFIANT POURVU DE COUCHE CENTRALE D'ÉTANCHÉITÉ

(30) Priorität: 07.03.2018 DE 102018203350
(43) Veröffentlichungstag der Anmeldung: 11.09.2019
(73) Patentinhaber: Continental Reifen Deutschland GmbH, 30165 Hannover (DE)
(72) Erfinder: Cai, Xiaoke, 30165 Hannover (DE); Doroshenko, Mikheil, 30823 Garbsen (DE); Tim Kee, Sherry-Ann, 30167 Hannover (DE); Guardalabene, Joe, 30659 Hannover (DE)
(74) Vertreter: Continental Corporation

(56) Entgegenhaltungen:
- EP-A1- 0 302 400
- EP-A1- 1 435 301
- WO-A1-2011/064698
- CN-A- 104 290 548
- CN-A- 104 385 652
- CN-A- 109 017 163
- US-A1- 2016 032 215

## Beschreibung

Die Erfindung betrifft einen selbstabdichtenden Fahrzeugluftreifen mit Dichtmittellage.

Selbstabdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, meistens die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper (das Einstichobjekt) vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

Aufgrund der Klebrigkeit des Dichtmittels selbst haftet dieses an der Innenfläche des Reifens.

In der US 4359078 wird ein Fahrzeugluftreifen umfassend ein Dichtmittel im Reifeninneren offenbart, bei dem das Dichtmittel mittels eines Klebstoffes an die Innenfläche des Fahrzeugreifens gebunden ist.

In beiden Fällen basiert die Haftung auf Adhäsion, d. h. einer physikalischen Anhaftung des Dichtmittels an das Reifeninnere.

Weitere selbstabdichtende Fahrzeugluftreifen sind in den Dokumenten US 2016/032215A und EP 0302400A beschrieben.

Allerdings besteht dabei die Herausforderung, dass durch hohe Zentrifugalkräfte im Fahrbetrieb des Reifens und im Pannenfall bei Bewegung des Einstichobjektes das Dichtmittel bewegt und in größerem Maße auf der Reifeninnenfläche umverteilt wird. Insbesondere nach dem (zufälligen) Entfernen des Einstichobjektes, insbesondere eines größeren Einstichobjektes, aus dem Reifen kann dann auch das Dichtmittel aus dem Reifen heraus fließen.

Der vorliegenden Erfindung liegt daher die Aufgabe zugrunde, einen selbstabdichtenden Fahrzeugluftreifen umfassend eine auf der dem Laufstreifen gegenüberliegenden Innenfläche einer radial inneren Lage des Fahrzeugluftreifens angeordnete Dichtmittellage bereitzustellen, bei dem im Pannenfall und insbesondere nach dem Entfernen des Einstichobjektes ein Ausfließen des Dichtmittels vermieden wird.

Gelöst wird diese Aufgabe durch die Merkmale des Anspruchs 1. Erfindungsgemäß ist das Dichtmittel der Dichtmittellage an der Innenfläche chemisch mit der radial inneren Lage des Fahrzeugluftreifens verbunden.

Hierdurch ist das Dichtmittel zumindest teilweise stärker lokal fixiert als durch die physikalische Adhäsion wie aus dem Stand der Technik bekannt.

Das Dichtmittel weist somit insgesamt eine erhöhte Ortsfestigkeit auf. Dabei fließt weiterhin ausreichend Dichtmittel in die Einstichstelle um diese abzudichten. Ein Ausfließen des Dichtmittels in größerem Maße wird aber vermieden, da sich das Dichtmittel nicht beliebig innerhalb des Reifeninneren umverteilen kann.

Gemäß einer vorteilhaften Ausführungsform der Erfindung weist die Dichtmittellage in radialer Richtung eine Schichtdicke von 2 bis 10 mm, besonders bevorzugt 2 bis 8 mm, ganz besonders bevorzugt 4 bis 5 mm, auf.

Die Schichtdicke wird dabei in radialer Richtung senkrecht zur axialen Richtung gemessen.

Die chemische Verbindung zwischen Dichtmittel und radial innerer Lage tritt somit zusätzlich zu der Vernetzung der radial inneren Lage mittels eines Vulkanisationssystems und der Vernetzung des Dichtmittels nach dem Auftragen des Dichtmittels auf die dem Laufstreifen gegenüberliegende Innenfläche auf.

Die chemische Reaktion zwischen radial innerer Lage und dem Dichtmittel kann insbesondere während des Vernetzungsprozesses des Dichtmittels gleichzeitig ablaufen. Die chemische Reaktion zwischen radial innerer Lage und dem Dichtmittel kann aber auch nachträglich stattfinden, insbesondere wenn eine zusätzliche Aktivierung notwendig ist.

Unter der "radial inneren Lage des Fahrzeugluftreifens" wird dabei die radial innerste Lage des Fahrzeugreifens in radialer Richtung gegenüber dem Laufstreifen verstanden, die noch nicht die Dichtmittellage ist, sondern auf die das Dichtmittel aufgebracht ist. Im Rahmen der vorliegenden Erfindung wird die Lage auch als "radial innere Lage" oder "radial innerste Lage" bezeichnet.

Grundsätzlich kann die radial innerste Lage, an die das Dichtmittel chemisch gebunden ist, jegliche Funktion im Reifen haben und jegliche für Fahrzeugreifen geeignete Zusammensetzungen und physikalische Beschaffenheit aufweisen.

Gemäß einer vorteilhaften Ausführungsform der Erfindung handelt es sich bei der radial inneren Lage um eine luftdicht ausgeführte Innenschicht (*engl.* Innerliner). Eine derartig ausgeführte Innenschicht hat dann erfindungsgemäß die Funktion, das Dichtmittel chemisch zu binden und gleichzeitig die Luftdichtigkeit des Reifens zu gewährleisten.

Die innere Lage, mit der das Dichtmittel chemisch verbunden ist, enthält bevorzugt wenigstens einen Dienkautschuk.

Gemäß einer bevorzugten Ausführungsform der Erfindung handelt es sich bei dem Dienkautschuk der radial inneren Lage um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Halobutylkautschuk, wie insbesondere Brombutylkautschuk (BIIR) und/oder Chlorbutylkautschuk (CIIR).

Gemäß einer vorteilhaften Ausführungsform der Erfindung, insbesondere, wenn die innere Lage die Innenschicht des Reifens darstellt, enthält die innere Lage wenigstens einen Butyl- und/oder Halobutylkautschuk.

Bevorzugt basiert das Dichtmittel auf der Vernetzung eines Kautschuks und/oder Polyolefins basiert.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk des Dichtmittels um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Dichtmittels und später bei der Anwendung, insbesondere im Fahrzeugluftreifen, besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt ist aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Gemäß einer Ausführungsform der Erfindung enthalten die innere Lage und die Dichtmittellage jeweils wenigstens ein vernetzbares Polymer und die chemische Verbindung basiert auf einer Vernetzung dieser Polymere miteinander. Beispielsweise handelt es sich bei den Polymeren um vernetzbare Dienkautschuke oder bereits vernetzte Dienkautschuke mit noch vernetzbaren Bereichen der Polymerketten.

Besonders bevorzugt enthalten das Dichtmittel und die radial innere Lage dabei wenigstens einen Butyl- und/oder Halobutylkautschuk.

Besonders bevorzugt wird in der Dichtmittellage wenigstens ein Butylkautschuk (IIR) verwendet. Butylkautschuk eignet sich besonders gut, da er eine vergleichsweise hohe Luftdichtigkeit aufweist, sodass die Luftdichtigkeit des Reifens im Pannenfall besonders gut gewährleistet ist.

Beispielsweise werden die Polymere der beiden Lagen mittels eines Schwefelvulkanisationssystems vernetzt.

Denkbar sind beispielsweise auch eine peroxidische Vernetzung und eine Vernetzung, die mittels Energieeinwirkung, wie durch Wärme oder Strahlung, insbesondere UV-Strahlung, ausgelöst wird oder mittels Metalloxiden, insbesondere im Fall von Polychloropren (CR) in der radial inneren Lage und/oder dem Dichtmittel.

Insbesondere durch nachträglichen Wärmeeintrag kann eine Reaktion nach der eigentlichen Vernetzung zwischen innerer Lage und Dichtmittel stattfinden (*engl.* "post curing").

Das zusätzliche Vernetzungssystem, bevorzugt peroxidische Vernetzungssystem, kann beispielsweise auch nach der Vulkanisation des Fahrzeugreifens (und damit auch nach der Vernetzung der radial inneren Lage) auf die radial innere Lage aufgebracht werden, beispielsweise durch Aufsprühen.

Bevorzugt wird unmittelbar im Anschluss aktiviert und das Dichtmittel aufgebracht, um eine sofortige Reaktion auszulösen. Dabei können einige Bestandteile des Vernetzungssystems, bevorzugt peroxidischen Vernetzungssystems, erst in der Dichtmittellage enthalten sein, sodass keine unerwünschte Vorabreaktion stattfindet sondern erst bei Kontakt von radial innerer Lage mit dem Dichtmittel.

Gemäß einer weiteren Ausführungsform der Erfindung wird ein Vernetzungssystem als Lösung oder Suspension auf die radial innere Oberfläche der radial inneren Lage aufgebracht, bevor das Dichtmittel aufgebracht wird. Die Lösung oder Suspension kann beispielsweise auch einen Latex enthalten, der an der Vernetzung teilhaben kann, beispielsweise auch durch Reaktion mit Substanzen aus der radial inneren Lage und/oder dem Dichtmittel.

Gemäß einer weiteren Ausführungsform der Erfindung enthalten die innere Lage und die Dichtmittellage jeweils wenigstens einen vernetzbaren Kohlenwasserstoffharzbestandteil und die chemische Verbindung basiert auf einer Vernetzung dieser Kohlenwasserstoffharzbestandteile miteinander.

Hierdurch bildet sich ein chemisches Netzwerk aus Kohlenwasserstoffharz zwischen der radial inneren Lage und dem Dichtmittel.

Es kann sich beispielsweise um ein Epoxidharz handeln, welches als Netzwerk aus zwei Komponenten gebildet wird. Bevorzugt ist eine der Komponenten im Dichtmittel und die andere in der radial inneren Lage enthalten oder wird unmittelbar vor dem Aufbringen des Dichtmittels auf die radial innere Lage aufgebracht.

Das Klebemittel aus Epoxidharz kann auch als separate Schicht zwischen radial innerer Lage und dem Dichtmittel aufgebracht werden. Erfindungswesentlich ist, dass das Dichtmittel chemisch an die radial innere Lage angebunden wird.

Der Vorteil dieser Ausführungsform der Erfindung, insbesondere im Fall von Epoxidharz, besteht insbesondere darin, dass die chemische Anbindung bei Raumtemperatur stattfinden kann.

Gemäß einer weiteren Ausführungsform der Erfindung enthält die innere Lage wenigstens einen Füllstoff und die Dichtmittellage wenigstens ein Kupplungsagens für diesen Füllstoff und/oder die innere Lage wenigstens ein Kupplungsagens und die Dichtmittellage wenigstens einen Füllstoff, sodass die chemische Verbindung auf einer Reaktion des Füllstoffs mit dem Kupplungsagens basiert.

Hierdurch bildet sich ein Füllstoffnetzwerk zwischen radial innerer Lage und Dichtmittellage.

Der Füllstoff ist beispielsweise eine Kieselsäure, die als Füllstoff für Reifenmischungen bekannt ist.

Die Begriffe "Kieselsäure" und Silika" werden im Rahmen der vorliegenden Erfindung synonym verwendet.

Bei den Kieselsäuren kann es sich um die dem Fachmann bekannten Kieselsäuren, insbesondere solche, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 350 m²/g, und eine CTAB-Oberfläche (gemäß ASTM D 3765) von 30 bis 400 m²/g, bevorzugt von 30 bis 330 m²/g, besonders bevorzugt von 95 bis 330 m²/g, und damit eine vergleichsweise hohe Oberfläche aufweist.

Bei dem Kupplungsagens handelt es sich, insbesondere im Fall von Kieselsäure als Füllstoff, beispielsweise um ein Organosilan. Unter Kupplungsagens wird hierbei eine Substanz verstanden, die zumindest an den Füllstoff, beispielsweise an Kieselsäure anbinden kann. Hierzu weist das Kupplungsagens eine entsprechende Gruppe auf, wie beispielsweise die Silyl-Gruppe -SiR₃ im Fall von Silanen, wobei wenigstens ein R eine Abgangsgruppe, wie eine Alkoxygruppe oder ein Halogenid oder eine vergleichbare chemische Abgangsgruppe ist.

Im Fall von Kieselsäure als Füllstoff und einem Organosilan als Kupplungsagens reagieren die Silyl-Gruppen des Kupplungsagens mit den OH-Gruppen an der Oberfläche der Kieselsäuren.

Gemäß einer vorteilhaften Weiterbildung der Erfindung handelt es sich bei dem Kupplungsagens um eine Substanz, die zusätzlich noch an andere Bestandteile, wie insbesondere an Polymere, angebunden werden kann. Hierzu kann das Kupplungsagens reaktive Gruppen, wie beispielsweise ungesättigte Kohlenstoff-Kohlenstoff-Bindungen (Doppelbindungen oder Dreifachbindungen) oder Schwefelgruppierungen oder sonstige reaktive Gruppen wie Stickstoffhaltige Gruppen, wie Aminogruppen, oder Sauerstoffhaltige Gruppen, wie Glycidylgruppen, aufweisen, die an einer Vernetzungsreaktion teilnehmen können (Polymerreaktive Gruppen). Geeignete Schwefelgruppierungen sind insbesondere
Mercaptogruppen: (-S-H) (auch Thiol genannt),
geblockte Mercaptogruppen: -S-Schutzgruppe, wobei es sich beispielsweise um Alkanoylschutzgruppen handeln kann, und
Polysulfane: Sₙ mit n größer oder gleich 2.

Gruppen mit ungesättigten Kohlenstoff-Kohlenstoff-Bindungen sind insbesondere Allyl-, Vinyl-, Alkinylen- Gruppen.

Sämtliche Gruppen können weitere Gruppen aufweisen und durch diese an den Füllstoffreaktiven Bestandteil gebunden sein. Derartige Gruppen werden auch als Abstandsgruppen oder Spacer bezeichnet. Beispielsweise umfassen die Spacer Alkylengruppen, wie z. B. Propylen im Fall von Mercaptopropylsilanen.

Gemäß einer Ausführungsform der Erfindung enthalten die radial innere Lage wenigstens einen Füllstoff, insbesondere wenigstens eine Kieselsäure, und das Dichtmittel wenigstens ein Polymer und zudem wird ein Kupplungsagens, welches an diesen Füllstoff und an wenigstens ein Polymer anbinden kann, auf die Oberfläche der radial inneren Lage aufgebracht, insbesondere durch Aufsprühen. Die chemische Verbindung basiert dann auf einer Reaktion des Füllstoffs mit dem Kupplungsagens und des Kupplungsagens mit dem Polymer. Das Polymer des Dichtmittels weist insbesondere Doppelbindungen auf und ist beispielsweise Butylkautschuk.

Bei dem Kupplungsagens handelt es sich insbesondere um ein Organosilan mit einer Silyl-Gruppe und einer Polymerreaktiven Gruppe, wie oben beschrieben, beispielsweise um (3-Mercaptopropyl)trimethoxysilan.

Die Silylgruppe umfasst wenigstens eine Abgangsgruppe zur Reaktion mit den OH-Gruppen an der Oberfläche der Kieselsäure, wie insbesondere wenigstens eine Alkoxygruppe, z. B. Methoxy- oder Ethoxy-Gruppe.

Die Mercaptogruppe kann dann in einer weiteren Reaktion an Polymere aus dem Dichtmittel anbinden.

Gemäß einer bevorzugten Ausführungsform der Erfindung wird die nach radial innen gerichtete Oberfläche der radial inneren Lage vor dem Aufbringen des Kupplungsagens vorbehandelt, beispielsweise mit einem Plasma, insbesondere einem Wasserstoff-Plasma. Hierbei werden Verunreinigungen an der Oberfläche der radial inneren Lage entfernt und somit eine verbesserte Reaktion der Kieselsäure mit dem Kupplungsagens ermöglicht. Beispielsweise werden 0,01 bis 10 Volumenprozent - basierend auf dem Volumen des später aufgebrachten Dichtmittels - an Kupplungsagens auf die radial innere Lage aufgebracht. Bevorzugt sind 0,01 bis 5 Vol.-%, besonders bevorzugt 0,01 bis 1 Vol.-%. Die Menge des aufgebrachten Kupplungsagens beträgt zudem vorteilhafterweise 0,1 bis 30 Gew.-%, bevorzugt 0,1 bis 20 Gew.-%, besonders bevorzugt 0,1 bis 10 Gew.-%, bezogen auf die Gesamtmenge an Kieselsäure, die in der radial inneren Lage enthalten ist.

Gemäß einer weiteren Ausführungsform der Erfindung enthält die Dichtmittellage wenigstens ein modifiziertes Polymer und die innere Lage wenigstens einen Füllstoff und/oder die innere Lage wenigstens ein modifiziertes Polymer und die Dichtmittellage wenigstens einen Füllstoff und die chemische Verbindung basiert auf einer Reaktion des Füllstoffs mit dem modifizierten Polymer.

Modifizierte Polymere sind dem Fachmann bekannt. Die Modifizierung wird auch als Funktionalisierung bezeichnet.

Bei der Modifizierung kann es sich beispielsweise um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln.

Gemäß einer vorteilhaften Ausführungsform der Erfindung ist der Füllstoff wenigstens eine Kieselsäure und die Modifizierung des Polymers ausgewählt aus Hydroxy-Gruppen, Ethoxy-Gruppen, Epoxy-Gruppen, Siloxan-Gruppen, Aminosiloxan, Carboxy-Gruppen und Silan-Sulfid-Gruppen.

Die Polymerketten des modifizierten Polymers können insbesondere ein Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) sein.

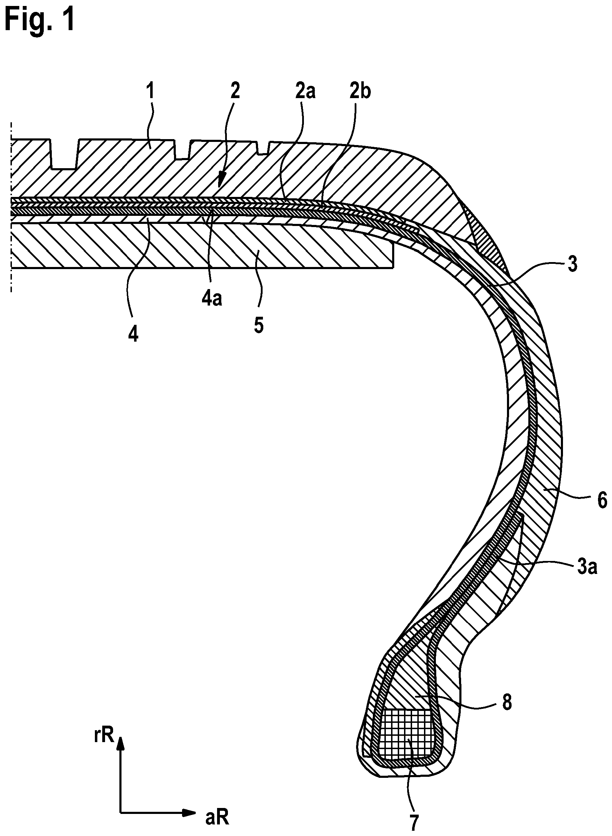

Weitere Einzelheiten der Erfindung werden anhand der Figur 1, die ein schematisches Ausführungsbeispiel darstellt, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 7 und Wulstkernprofile 8 von axial innen nach axial außen herumgeführt ist und im Karkasshochschlag 3a endet, sowie Seitenwände 6. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen.

Die radial innere Lage 4 des Fahrzeugluftreifens ist eine luftdicht ausgeführte Innenschicht enthaltend wenigstens einen Halobutyl-Kautschuk und/oder wenigstens einen Butylkautschuk.

Die radial innere Lage 4 weist eine nach radial innen gerichtete Oberfläche 4a auf. Die Selbstdichtung des Fahrzeugluftreifens ist durch eine nachträglich umlaufend auf die radial nach innen gerichtete Oberfläche 4a aufgebrachte Dichtmittellage 5 erhalten.

Die erste Dichtmittellage 5 weist im Wesentlichen die Breite des Gürtelpakets 2 auf und ist im Wesentlichen in dessen Projektion angeordnet.

Die radial innere Lage 4 und die Dichtmittellage 5 sind chemisch durch wenigstens eine der oben beschriebenen Möglichkeiten verbunden.

Beispielsweise basiert die chemische Bindung auf der Reaktion wenigstens einer Kieselsäure, welche in der radial inneren Lage 4 enthalten ist, mit (3-Mercaptopropyl)trimethoxysilan, welches vor dem Aufbringen der Dichtmittellage 5 auf die Oberfläche 4a aufgesprüht wurde, und des (3-Mercaptopropyl)trimethoxysilans mit wenigstens einem Polymer, insbesondere wenigstens eines Polymers mit noch vorhandenen Doppelbindungen, wie Butylkautschuk. Beispielsweise wird die Reaktion des (3-Mercaptopropyl)trimethoxysilans mit dem Butylkautschuk während des Aufbringens der Dichtmittellage 5 durch eine vergleichsweise hohe Temperatur des Dichtmittels ausgelöst, wie beispielsweise 100 °C.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Radial innere Lage, insbesondere Innenschicht
- 4a: dem Laufstreifen gegenüberliegenden Innenfläche
- 5: Dichtmittellage
- 6: Seitenwand
- 7: Wulstkern
- 8: Wulstkernprofil

- rR: radiale Richtung
- aR: axiale Richtung

## Patentansprüche

1. Selbstabdichtender Fahrzeugluftreifen umfassend eine auf der dem Laufstreifen (1) gegenüberliegenden Innenfläche (4a) einer radial inneren Lage (4) des Fahrzeugluftreifens angeordnete Dichtmittellage (5), **dadurch gekennzeichnet, dass** das Dichtmittel der Dichtmittellage (5) an der Innenfläche (4a) chemisch mit der radial inneren Lage (4) des Fahrzeugluftreifens verbunden ist, wobei die chemische Verbindung durch folgende Alternativen hergestellt ist: a) wobei die innere Lage (4) und die Dichtmittellage (5) jeweils wenigstens ein vernetzbares Polymer enthalten und die chemische Verbindung auf einer Vernetzung dieser Polymere miteinander basiert, oder b) wobei ein Vernetzungssystem als Lösung oder Suspension auf die radial innere Oberfläche der radial inneren Lage (4) aufgebracht wird, bevor das Dichtmittel aufgebracht wird, oder c) wobei die innere Lage (4) und die Dichtmittellage (5) jeweils wenigstens einen vernetzbaren Kohlenwasserstoffharzbestandteil enthalten und die chemische Verbindung auf einer Vernetzung dieser Kohlenwasserstoffharzbestandteile miteinander basiert, wodurch sich ein chemisches Netzwerk aus Kohlenwasserstoffharz zwischen der radial inneren Lage (4) und dem Dichtmittel bildet, oder d) wobei die innere Lage (4) wenigstens einen Füllstoff und die Dichtmittellage (5) wenigstens ein Kupplungsagens für diesen Füllstoff enthält und/oder die Dichtmittellage (5) wenigstens einen Füllstoff und die innere Lage (4) wenigstens ein Kupplungsagens für diesen Füllstoff enthält und die chemische Verbindung auf einer Reaktion des Füllstoffs mit dem Kupplungsagens basiert, oder e) wobei die innere Lage (4) wenigstens einen Füllstoff und das Dichtmittel (5) wenigstens ein Polymer enthalten und wenigstens ein Kupplungsagens, welches an diesen Füllstoff und an wenigstens ein Polymer anbinden kann, auf die Innenfläche (4a) aufgebracht ist, und die chemische Verbindung auf einer Reaktion des Füllstoffs mit dem Kupplungsagens und des Kupplungsagens mit dem Polymer basiert, oder f) wobei die Dichtmittellage (5) wenigstens ein modifiziertes Polymer und die innere Lage (4) wenigstens einen Füllstoff enthalten und/oder die innere Lage (4) wenigstens ein modifiziertes Polymer und die Dichtmittellage (5) wenigstens einen Füllstoff enthalten, und die chemische Verbindung auf einer Reaktion des Füllstoffs mit dem modifizierten Polymer basiert.

2. Fahrzeugluftreifen nach Anspruch 1, **dadurch gekennzeichnet, dass** es sich bei der radial inneren Lage (4) um eine luftdicht ausgeführte Innenschicht handelt.

3. Fahrzeugluftreifen nach einem der Ansprüche 1 oder 2, **dadurch gekennzeichnet, dass** bei der Alternative c) das Kohlenwasserstoffharz ein Epoxidharz ist, welches als Netzwerk aus zwei Komponenten gebildet wird, wobei eine der Komponenten im Dichtmittel und die andere in der radial inneren Lage (4) enthalten ist oder unmittelbar vor dem Aufbringen des Dichtmittels auf die radial innere Lage (4) aufgebracht wird oder das Epoxidharz als separate Schicht zwischen radial innerer Lage und dem Dichtmittel aufgebracht wird.

4. Fahrzeugluftreifen nach einem der Ansprüche 1 oder 2, **dadurch gekennzeichnet, dass** bei der Alternative e) die nach radial innen gerichtete Oberfläche der radial inneren Lage (4) vor dem Aufbringen des Kupplungsagens vorbehandelt wird, beispielsweise mit einem Plasma, insbesondere einem Wasserstoff-Plasma.

5. Fahrzeugluftreifen nach einem der Ansprüche 1 oder 2 oder 4, **dadurch gekennzeichnet, dass** bei der Alternative e) 0,01 bis 10 Volumenprozent - basierend auf dem Volumen des später aufgebrachten Dichtmittels - an Kupplungsagens auf die radial innere Lage aufgebracht werden und/oder die Menge des aufgebrachten Kupplungsagens beträgt 0,1 bis 30 Gew.-%, bevorzugt 0,1 bis 20 Gew.-%, besonders bevorzugt 0,1 bis 10 Gew.-%, bezogen auf die Gesamtmenge an Kieselsäure, die in der radial inneren Lage enthalten ist.

6. Fahrzeugluftreifen nach einem der Ansprüche 1 oder 2 oder 4 oder 5, **dadurch gekennzeichnet, dass** es sich bei dem Kupplungsagens um ein Organosilan, insbesondere ein Organosilan mit wenigstens einer Polymerreaktiven Gruppe, handelt.

7. Fahrzeugluftreifen nach einem der Ansprüche 1 oder 2, **dadurch gekennzeichnet, dass** es sich bei der Alternative f) bei der Modifizierung der modifizierten Polymere um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handelt.

8. Fahrzeugluftreifen nach einem der vorherigen Ansprüche, **dadurch gekennzeichnet, dass** die innere Lage (4) wenigstens einen Dienkautschuk, bevorzugt wenigstens einen Butyl- und/oder Halobutylkautschuk, enthält.

9. Fahrzeugluftreifen nach einem der vorherigen Ansprüche, **dadurch gekennzeichnet, dass** das Dichtmittel der Dichtmittellage (5) auf der Vernetzung eines Kautschuks und/oder Polyolefins basiert.

10. Fahrzeugluftreifen nach einem der vorherigen Ansprüche, **dadurch gekennzeichnet, dass** die Dichtmittellage in radialer Richtung eine Schichtdicke von 2 bis 10 mm, besonders bevorzugt 2 bis 8 mm, ganz besonders bevorzugt 3 bis 5 mm, aufweist.

## Claims

1. Self-sealing pneumatic vehicle tire comprising a sealant ply (5) arranged on the inner surface (4a) of a radially inner ply (4) of the pneumatic vehicle tire opposite the tread (1), **characterized in that** the sealant of the sealant ply (5) is chemically bonded to the radially inner ply (4) of the pneumatic vehicle tire at the inner surface (4a), wherein the chemical bond is produced by the following alternatives: a) wherein the inner ply (4) and the sealant ply (5) each contain at least one crosslinkable polymer and the chemical compound is based on a crosslinking of these polymers with one another or b) wherein a crosslinking system is applied to the radially inner surface of the radially inner ply (4) in the form of a solution or suspension before the sealant is applied or c) wherein the inner ply (4) and the sealant ply (5) each contain at least one crosslinkable hydrocarbon resin constituent and the chemical bond is based on a crosslinking of these hydrocarbon resin constituents with one another to form a chemical network of hydrocarbon resin between the radially inner ply (4) and the sealant or d) wherein the inner ply (4) contains at least one filler and the sealant ply (5) contains at least one coupling agent for this filler and/or the sealant ply (5) contains at least one filler and the inner ply (4) contains at least one coupling agent for this filler and the chemical bond is based on the reaction of the filler with the coupling agent or e) wherein the inner ply (4) contains at least one filler and the sealant (5) contains at least one polymer and at least one coupling agent, which can bond with this filler and with at least one polymer, is applied to the inner surface (4a) and the chemical bond is based on a reaction of the filler with the coupling agent and of the coupling agent with the polymer or f) wherein the sealant ply (5) contains at least one modified polymer and the inner ply (4) contains at least one filler and/or the inner ply (4) contains at least one modified polymer and the sealant ply (5) contains at least one filler and the chemical compound is based on a reaction of the filler with the modified polymer.

2. Pneumatic vehicle tire according to Claim 1, **characterized in that** the radial inner ply (4) is an airtight inner layer.

3. Pneumatic vehicle tire according to Claim 1 or 2, **characterized in that** in the case of alternative c) the hydrocarbon resin is an epoxy resin which is formed as a network from two components, wherein one of the components is present in the sealant and the other is present in the radially inner ply (4) or is applied to the radially inner ply (4) immediately before the application of the sealant or the epoxy resin is applied as a separate layer between the radially inner ply and the sealant.

4. Pneumatic vehicle tire according to either of Claims 1 or 2, **characterized in that** in the case of alternative e) the surface of the radially inner ply (4) oriented radially inwards is pretreated before application of the coupling agent, for example with a plasma, in particular a hydrogen plasma.

5. Pneumatic vehicle tire according to any of Claims 1 or 2 or 4, **characterized in that** in the case of alternative e) 0.01 % to 10% by volume - based on the volume of the subsequently applied sealant - of coupling agent are applied to the radially inner ply and/or the amount of the applied coupling agent is 0.1% to 30% by weight, preferably 0.1% to 20% by weight, particularly preferably 0.1% to 10% by weight, based on the total amount of silica present in the radially inner ply.

6. Pneumatic vehicle tire according to any of Claims 1 or 2 or 4 or 5, **characterized in that** the coupling agent is an organosilane, in particular an organosilane having at least one polymer-reactive group.

7. Pneumatic vehicle tire according to either of Claims 1 or 2, **characterized in that** in the case of alternative f) the modifications of the modified polymers are modifications with hydroxy groups and/or ethoxy groups and/or epoxy groups and/or siloxane groups and/or amino groups and/or aminosiloxane and/or carboxy groups and/or phthalocyanine groups and/or silane-sulfide groups.

8. Pneumatic vehicle tire according to any of the preceding claims, **characterized in that** the inner ply (4) is at least one diene rubber, preferably at least one butyl and/or halobutyl rubber.

9. Pneumatic vehicle tire according to any of the preceding claims, **characterized in that** the sealant of the sealant ply (5) is based on the crosslinking of a rubber and/or polyolefin.

10. Pneumatic vehicle tire according to any of the preceding claims, **characterized in that** in the radial direction the sealant ply has a layer thickness of 2 to 10 mm, particularly preferably 2 to 8 mm, very particularly preferably 3 to 5 mm.

## Revendications

1. Pneumatique de véhicule auto-étanchéifiant comprenant une couche d'agent d'étanchéité (5) disposée sur la surface intérieure (4a), située à l'opposé de la bande de roulement (1), d'une couche radialement intérieure (4) du pneumatique de véhicule, **caractérisé en ce que** l'agent d'étanchéité de la couche d'agent d'étanchéité (5) est relié chimiquement à la couche radialement intérieure (4) du pneumatique de véhicule sur la surface intérieure (4a), la liaison chimique étant réalisée par les variantes suivantes : a) la couche intérieure (4) et la couche d'agent d'étanchéité (5) contenant chacune au moins un polymère réticulable et la liaison chimique étant basée sur une réticulation de ces polymères entre eux, ou b) un système de réticulation étant appliqué sous forme de solution ou de suspension sur la surface radialement intérieure de la couche radialement intérieure (4) avant l'application de l'agent d'étanchéité, ou c) la couche intérieure (4) et la couche d'agent d'étanchéité (5) contenant chacune au moins un composant de résine hydrocarbonée réticulable et la liaison chimique étant basée sur une réticulation de ces composants de résine hydrocarbonée entre eux, formant ainsi un réseau chimique de résine hydrocarbonée entre la couche radialement intérieure (4) et l'agent d'étanchéité, ou d) la couche intérieure (4) contenant au moins une matière de charge et la couche d'agent d'étanchéité (5) contenant au moins un agent de couplage pour cette matière de charge et/ou la couche d'agent d'étanchéité (5) contenant au moins une matière de charge et la couche intérieure (4) contenant au moins un agent de couplage pour cette matière de charge et la liaison chimique étant basée sur une réaction de la matière de charge avec l'agent de couplage, ou e) la couche intérieure (4) contenant au moins une matière de charge et l'agent d'étanchéité (5) contenant au moins un polymère et au moins un agent de couplage, qui peut se lier à cette matière de charge et à au moins un polymère, étant appliqué sur la surface intérieure (4a), et la liaison chimique étant basée sur une réaction de la matière de charge avec l'agent de couplage et de l'agent de couplage avec le polymère, ou f) la couche d'agent d'étanchéité (5) contenant au moins un polymère modifié et la couche intérieure (4) contenant au moins une matière de charge et/ou la couche intérieure (4) contenant au moins un polymère modifié et la couche d'agent d'étanchéité (5) contenant au moins une matière de charge, et la liaison chimique étant basée sur une réaction de la matière de charge avec le polymère modifié.

2. Pneumatique de véhicule selon la revendication 1, **caractérisé en ce que** la couche radialement intérieure (4) est une couche intérieure conçue pour être étanche à l'air.

3. Pneumatique de véhicule selon l'une quelconque des revendications 1 et 2, **caractérisé en ce que** pour la variante c) la résine hydrocarbonée est une résine époxy, qui est formée en tant que réseau de deux composants, l'un des composants étant contenu dans l'agent d'étanchéité et l'autre dans la couche radialement intérieure (4) ou étant appliqué sur la couche radialement intérieure (4) immédiatement avant l'application de l'agent d'étanchéité ou la résine époxyde étant appliquée en tant que couche distincte entre la couche radialement intérieure et l'agent d'étanchéité.

4. Pneumatique de véhicule selon l'une quelconque des revendications 1 et 2, **caractérisé en ce que** pour la variante e), la surface de la couche radialement intérieure (4) orientée radialement vers l'intérieur est prétraitée avant l'application de l'agent de couplage, par exemple avec un plasma, en particulier un plasma d'hydrogène.

5. Pneumatique de véhicule selon l'une quelconque des revendications 1 et 2 et 4, **caractérisé en ce que** pour la variante e), 0,01 à 10 pour cent en volume - sur la base du volume de l'agent d'étanchéité appliqué ultérieurement - d'agent de couplage sont appliqués sur la couche radialement intérieure et/ou la quantité d'agent de couplage appliqué est de 0,1 à 30 % en poids, préférablement de 0,1 à 20 % en poids, particulièrement préférablement de 0,1 à 10 % en poids, par rapport à la quantité totale d'acide silicique qui est contenu dans la couche radialement intérieure.

6. Pneumatique de véhicule selon l'une quelconque des revendications 1 et 2 et 4 et 5, **caractérisé en ce que** l'agent de couplage est un organosilane, en particulier un organosilane doté d'au moins un groupe réactif avec un polymère.

7. Pneumatique de véhicule selon l'une quelconque des revendications 1 et 2, **caractérisé en ce que** pour la variante f), la modification des polymères modifiés est une avec des groupes hydroxy et/ou des groupes éthoxy et/ou des groupes époxy et/ou des groupes siloxane et/ou des groupes amino et/ou des groupes aminosiloxane et/ou des groupes carboxy et/ou des groupes phtalocyanine et/ou des groupes sulfure de silane.

8. Pneumatique de véhicule selon l'une quelconque des revendications précédentes, **caractérisé en ce que** la couche intérieure (4) contient au moins un caoutchouc de diène, préférablement au moins un caoutchouc de butyle et/ou caoutchouc d'halogénobutyle.

9. Pneumatique de véhicule selon l'une quelconque des revendications précédentes, **caractérisé en ce que** l'agent d'étanchéité de la couche d'agent d'étanchéité (5) est basé sur la réticulation d'un caoutchouc et/ou d'une polyoléfine.

10. Pneumatique de véhicule selon l'une quelconque des revendications précédentes, **caractérisé en ce que** la couche d'agent d'étanchéité présente, dans la direction radiale, une épaisseur de couche de 2 à 10 mm, particulièrement préférablement de 2 à 8 mm, tout particulièrement préférablement de 3 à 5 mm.
